# EUROPÄISCHE PATENTANMELDUNG

(11) **EP 3 812 519 A1**
(43) Veröffentlichungstag der Anmeldung: **28.04.2021**
(21) Anmeldenummer: 20202764.5
(22) Anmeldetag: 20.10.2020
(51) Int. Cl.: E03C 1/04, F24D 17/00

(54) **VENTILANORDNUNG**

(30) Priorität: 21.10.2019 DE 102019128364
(71) Anmelder: Horcher GmbH, 61330 Nidderau (DE)
(72) Erfinder: HORCHER, Stefan, 61130 Nidderau (DE)
(74) Vertreter: Stoffregen, Hans-Herbert

(57) **Zusammenfassung**

Die Erfindung bezieht sich auf ein Verfahren und eine Anordnung zum Steuern der Abgabe einer Flüssigkeit aus einer Armatur (10), wobei die Flüssigkeitsabgabe mittels eines über eine codierbare elektrische Steuerung (14) betätigbaren Absperrventils (12) absperrbar ist, wenn die Temperatur der Flüssigkeit zu einer Gefährdung führt.

## Beschreibung

Die Erfindung bezieht sich auf ein Verfahren zum Steuern der Abgabe einer Flüssigkeit aus einer Armatur, insbesondere zur Abgabe von Wasser aus einem Thermostatmischventil oder Thermostatmischbatterie, umfassend einen mit einer Ventilspindel eines ersten Ventils zusammenwirkenden Stellgriff, wobei der Stellgriff ein erstes Anschlagelement aufweist oder ein solches von diesem ausgeht, das in Abhängigkeit von der Stellung des Stellgriffs mit einem zweiten oder einem dritten Anschlagelement oder einer Anschlageinrichtung zusammenwirkt, das bzw. die ortsfest zu dem ersten Ventil angeordnet sind, wobei die von der Armatur abgegebene Flüssigkeit
- bei Zusammenwirken des ersten Anschlagelements mit dem zweiten Anschlagelement eine Temperatur T1 aufweist,
- nach Überwinden des zweiten Anschlagelementes und Zusammenwirken des ersten Anschlagelements mit dem dritten Anschlagelement eine Temperatur T2 mit T2 > T1 aufweist, und
- nach Überwinden des dritten Anschlagelements eine Temperatur T3 mit T3 > T2 aufweist.

Gegenstand der Erfindung ist auch eine Flüssigkeitsventilanordnung, insbesondere Thermostatmischventil wie -batterie, umfassend einen mit einer aus einem Ventilgehäuse herausgeführten Ventilspindel zusammenwirkenden Stellgriff mit einem mit diesem verstellbaren ersten Anschlagelement, der in unterschiedlichen Drehstellungen des Drehgriffs mit ortsfest zu dem oder an dem Ventilgehäuse angeordneten zweiten und dritten Anschlagelementen oder -einrichtungen zusammenwirkt.

Um eine Verbrühgefahr zu vermeiden, ist es üblich, Wasserarmaturen auf eine maximale Endtemperatur von ca. 42 °C zu beschränken. Das Risiko bei dieser Temperatur besteht jedoch in einer Verkeimung mit z.B. Legionellen, so dass es erforderlich ist, eine thermische Desinfektion durchzuführen, bei der die Flüssigkeit mit einer Temperatur von z.B. 70 °C durch die Leitungen und die Armatur gespült wird.

In Krankenhäusern, Pflegeheimen oder Kinderheimen gelangen üblicherweise Mischbatterien zum Einsatz, die zwei Anschläge aufweisen, wobei bei Erreichen eines ersten Anschlages die Temperatur bis 38 °C und im Bereich zwischen dem ersten und zweiten Anschlag die Temperatur zwischen 38 °C und 42 °C betragen kann. Will man eine Entkeimung vornehmen, so muss der zweite Anschlag überwunden werden. Dies erfolgt häufig durch Öffnen der Armatur, um sodann händisch den die Armatur betätigenden Stellgriff so zu verstellen, dass ein Durchspülen bei der eine Entkeimung ermöglichenden Temperatur erfolgt.

Eine entsprechende Handhabung ist mit einem hohen Personaleinsatz verbunden. Zudem besteht das Risiko, dass der Stellgriff nicht ordnungsgemäß zurückmontiert wird, so dass bei einer Benutzung die Gefahr eines Verbrühens erfolgt.

Gegenstand der EP 1 903 268 A2 ist ein Stellgriff für ein Wasserventil, der an einer aus einem Ventilgehäuse bewegbar herausgeführten Ventilspindel befestigt ist und der einen Festanschlag aufweist, welcher mit wenigstens einem an dem Ventilgehäuse angeordneten Anschlag zusammenwirkt, wobei am Stellgriff ein weiterer nach außen verdeckt angeordneter und aus seiner Anschlagposition lösbarer Anschlag vorgesehen ist, wobei zur Auslenkung des lösbaren Anschlags aus seiner Anschlagposition zur Entriegelung der Innenbegrenzung eine Vorrichtung zum Zusammenwirken mit dem Stellgriff bereitgestellt ist. Diese Vorrichtung ist in axialer Richtung zu dem Stellgriff verschiebbar angeordnet, um den Anschlag zu lösen.

Ein Stellgriff einer Armatur nach der EP 0 778 434 A1 ist an einer aus einem Ventilgehäuse herausgeführten begrenzt drehbaren Ventilspindel drehfest angeordnet, wobei an dem Ventil ein von einem Benutzer lösbarer Drehanschlag für den Stellgriff vorgesehen ist. Ferner ist der Stellgriff auf der Ventilspindel begrenzt axial verschiebbar angeordnet und weist zumindest einen axialen Vorsprung auf, der mit einem oder mehreren Anschlägen des Ventilgehäuses derart zusammenwirkt, dass der axiale Vorsprung des Stellgriffs in der einen axialen Endstellung an dem oder den Anschlägen vorbei drehbar ist.

Der vorliegenden Erfindung liegt die Aufgabe zugrunde, ein Verfahren und eine Ventilanordnung der eingangs genannten Art so weiterzubilden, dass eine gefahrlose Nutzung erfolgen kann, gleichzeitig die Möglichkeit besteht, problemlos eine Desinfektion durchzuführen.

Erfindungsgemäß wird die Aufgabe verfahrensmäßig dadurch gelöst, dass die Flüssigkeitsabgabe mittels eines über eine codierbare elektrische Steuerung betätigbaren Absperrventils als zweites Ventil dann abgesperrt wird, wenn die von dem ersten Ventil abgegebene Flüssigkeit die Temperatur T3 aufweist, und dass das Absperrventil erst dann bei der Temperatur T3 wieder geöffnet wird, wenn ein vorgegebener Code in die Steuerung eingegeben wird.

Erfindungsgemäß kann folglich das dritte Anschlagelement bzw. Anschlageinrichtung, das bzw. die das ortsfest dem Ventilgehäuse zugeordnete zweite Anschlagelement oder -einrichtung ist, kontrolliert überwunden werden, um ein Entkeimen durchzuführen, ohne dass die Gefahr besteht, dass z.B. Verbrühungen auftreten; denn mittels des elektrisch betätigten Absperrventils, wie Magnetventils, wird eine Flüssigkeitsabgabe unterbunden, wenn die aus dem Ventil austretende Flüssigkeit eine Temperatur aufweist, die zu einer Gefährdung führen kann. Dabei kann die Temperatur z.B. in einem Wanneneinlauf oder in einem Brausenzulauf bzw. -kopf oder in einer Wanne mittels einer oder mehrerer Sensoren gemessen werden, um die Steuerung zum Absperren des zweiten Ventils zu beeinflussen. Vorzugsweise kann an mehreren Stellen eine Temperaturmessung erfolgen, um eine Gefährdung auszuschließen, wobei ein Absperren des zweiten Ventils erfolgt, wenn an einem Sensor eine unzulässige Temperatur erfasst wird.

In Weiterbildung der Erfindung ist des Weiteren vorgesehen, dass dann, wenn die Temperatur in einen kritischen Bereich gelangt, ein Warnton ertönt, der z.B. bei einer Temperatur von 41 °C intermittierend auftritt und bei einer höheren Temperatur von z.B. 42 °C stetig ertönt.

Wird die Temperatur T3 erreicht, wird erfindungsgemäß das Absperrventil geschlossen, so dass der Wasserzulauf unterbrochen ist. Um das Absperrventil zu öffnen, muss eine Codierung z.B. auf einem Touchpanel bzw. Touchscreen eingegeben werden. Nach Eingabe des Codes wird der weitere Wasserzulauf bei erhöhten Temperaturen ermöglicht, wobei nach einer vorgegebenen bzw. einstellbaren Zeitspanne automatisch das Absperrventil geschlossen wird.

Bei einer erneuten Nutzung der Armatur bleibt bzw. ist das Absperrventil nur dann geöffnet, wenn die von dem oder den Sensoren erfasste Temperatur unterhalb der kritischen Temperatur T3 liegt.

Insbesondere ist vorgesehen, dass nach Überwinden des dritten Anschlagelements oder -einrichtung und bei weiterem Betätigen, wie Drehen, des Stellgriffs das erste Anschlagelement mit einem unüberwindbaren vierten Anschlagelement oder -einrichtung zusammenwirkt.

Nachstehend wird stets der Begriff Anschlagelement benutzt, wenngleich es sich auch um eine Anschlageinrichtung wie Zwischenraum handeln kann.

Bevorzugterweise wird das erste mit dem Stellgriff verbundene Anschlagelement radial in Richtung der Ventilspindel verstellt, um das zweite Anschlagelement, also das ortsfest dem Ventil zugeordnete erste Anschlagelement zu überwinden.

Zur Überbrückung des dritten Anschlagelements wird das erste Anschlagelement sowohl radial als auch axial verstellt.

Eine Flüssigkeitsventilanordnung der eingangs genannten Art zeichnet sich dadurch aus, dass der Ventilanordnung ein elektrisch betätigbares Absperrventil als zweites Ventil zugeordnet ist, das mit einer Steuerung verbunden ist, über die das Absperrventil automatisch absperrbar ist, wenn die Temperatur der Flüssigkeit im Auslassbereich und/oder in einer die Flüssigkeit sammelnden Aufnahme eine vorgegebene Temperatur T3 überschreitet, und dass das Absperrventil geschlossen bleibt, wenn das Eingeben einer vorgegebenen Codierung in die Steuerung unterbleibt, sofern weiterhin eine Temperatur T mit T ≥ T3 in der Flüssigkeit herrscht.

Wird das dritte Anschlagelement, das das dem Ventil ortsfest zugeordnete zweite Anschlagelement ist, überwunden und somit am Auslass der Ventilanordnung eine Temperatur herrschen kann, die zu einer Gefährdung führen kann, so wird automatisch der Flüssigkeitszulauf durch das Absperrventil, das bevorzugterweise ein Magnetventil ist, abgesperrt. Um ungeachtet dessen eine Entkeimung vorzunehmen, muss ein Code in die Steuerung eingegeben werden, um das Absperrventil wieder zu öffnen. Nach Abschluss der Entkeimung oder nach erneutem automatischen Absperren des Absperrventils nach einer vorgegebenen Zeit wird der Stellgriff zurückgedreht, um das erste Ventil abzusperren oder so einzustellen, dass zulässige Temperaturen herrschen. Das Absperrventil wird nach einer zuvor programmierten Zeit oder durch Eingabe eines Codes geöffnet. Erfassen die Sensoren bei Flüssigkeitszufluss sodann eine Temperatur, die unterhalb der gefahrbringenden liegt, so bleibt das Absperrventil geöffnet und eine übliche Nutzung der Ventilanordnung wird ermöglicht.

Insbesondere ist vorgesehen, dass die Ventilanordnung ein ortsfest dem Ventilgehäuse zugeordnetes und von dem ersten Anschlagelement unüberwindbares viertes Anschlagelement aufweist.

Somit zeichnet sich die Erfindung insbesondere dadurch aus, dass die Ventilanordnung insgesamt drei ortsfest dem ersten Ventil zugeordnete Anschläge aufweist, wobei bei Einstellung zwischen dem ortsfesten zweiten und dritten Anschlag, also das dritte und vierte Anschlagelement, Flüssigkeit eine Auslasstemperatur aufweist, die ein Entkeimen ermöglicht.

Insbesondere ist vorgesehen, dass das erste Anschlagelement über ein von dem Stellgriff ausgehendes federvorgespanntes Betätigungselement zum Überwinden des zweiten und dritten Anschlagelements radial verstellbar ausgebildet ist.

Hervorzuheben ist des Weiteren, dass zumindest das zweite und das dritte Anschlagelement von einem von der Ventilspindel durchsetzten und diese koaxial umgebenden und mit dem Ventilgehäuse verbundenen oder einen Abschnitt von diesem bildenden Basiskörper ausgehen, der eine Oberseite mit einer Ringgeometrie aufweisen sollte, wobei das zweite Anschlagelement eine erste Stirnfläche eines von der Oberseite ausgehenden koaxial zur Ventilspindel verlaufenden ersten Ring- oder Hohlzylindermantelabschnitts ist und/oder das dritte Anschlagelement durch einen zwischen einer zweiten Stirnfläche des ersten Hohlzylindermantelabschnitts und einer ersten Stirnfläche eines von der Oberseite des Basiskörpers ausgehenden koaxial zu der Ventilspindel verlaufenden zweiten Ring- oder Hohlzylindermantelabschnitts verlaufenden Zwischenraum gebildet ist.

Die Stirnflächen sollten senkrecht oder schräg zu der von der Oberseite aufgespannten Ebene verlaufen.

Die Innenseiten der Hohlzylindermantelabschnitte bieten dabei Führungsflächen für das von dem Stellgriff ausgehende erste Anschlagelement beim Drehen des Stellgriffs.

In Weiterbildung ist vorgesehen, dass der zweite Hohlzylindermantelabschnitt in seinem zu dessen ersten Stirnfläche fernliegenden Endbereich einen in Richtung der Spindel abgewinkelten oder gekröpften Abschnitt als das vierte Anschlagelement, also den dritten ortsfesten Anschlag, aufweist.

Dabei dient auch die Innenfläche des zweiten Hohlzylindermantelabschnitts als Führungsfläche beim Verstellen des ersten Anschlagelements.

Um ein unbeabsichtigtes Überwinden des dritten Anschlagelementes zu vermeiden, ist vorgesehen, dass von der Innenseite des zweiten Hohlzylindermantelabschnitts und im Bereich seiner ersten Stirnfläche verlaufend ein sich radial erstreckender Vorsprung ausgeht, dessen in axialer Richtung des Basiskörpers verlaufende Höhe vorzugsweise geringer als Höhe des zweiten Hohlzylindermantelabschnitts ist. Somit ist nicht nur ein radiales Verstellen des ersten Anschlagelements erforderlich, sondern zusätzlich muss der Stellgriff axial von dem Ventilgehäuse wegbewegt werden. Mit anderen Worten ist vorgesehen, dass zum Überwinden des Vorsprungs das erste Anschlagelement radial in Richtung der Spindel und axial verstellt wird.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmendem bevorzugten Ausführungsbeispiel.

Es zeigen:
- Fig. 1: eine Ventilanordnung,
- Fig. 2: die Ventilanordnung nach Fig. 1 in Explosionsdarstellung,
- Fig. 3: einen Ringkörper mit Anschlagelementen,
- Fig. 4: eine Prinzipdarstellung des Ringkörpers in Draufsicht mit Anschlagelementen,

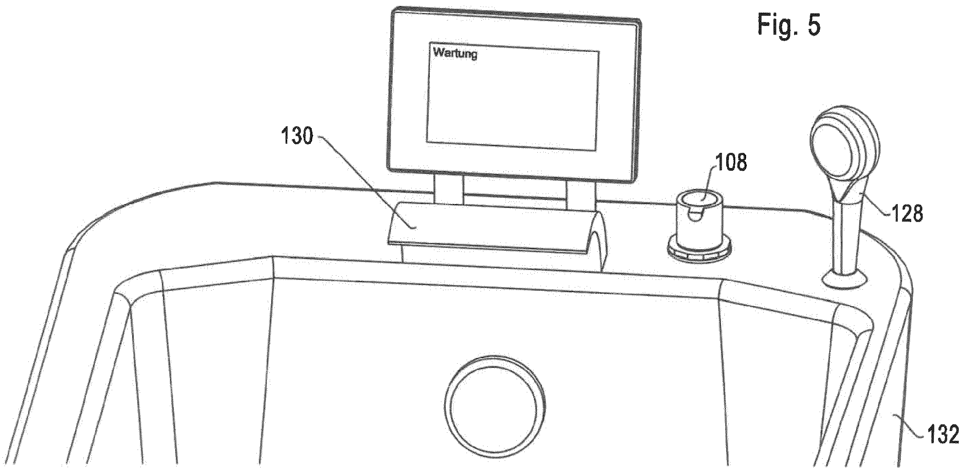

- Fig. 5: einen Ausschnitt einer Badewanne mit Touchpanel,
- Fig. 6: eine Prinzipdarstellung der Ventilanordnung mit Absperrventil und
- Fig. 7: ein Installationsschema.

Anhand der Figuren wird die erfindungsgemäße Lehre erläutert, aufgrund der eine thermische Desinfektion einer Wasserarmatur bei Temperaturen von z.B. 60 °C bis 70 °C erfolgen kann, ohne dass bei Normalbetrieb der Armatur die Gefahr einer Verbrühung besteht.

Hierzu ist erfindungsgemäß vorgesehen, dass in den Zufluss oder Auslass einer Ventilanordnung 10 ein elektrisch betätigbares Absperrventil 12 angeordnet ist, das dann automatisch absperrt, wenn über ein oder mehrere Sensoren 16 eine Temperatur im Auslassbereich der Ventilanordnung 10 erfasst wird, und/oder in einem Bereich, in dem Flüssigkeit aufgefangen wird, die über einer zulässigen Temperatur liegt, also insbesondere oberhalb von 42 °C. Um ungeachtet dessen eine Desinfektion durchzuführen, also das Absperrventil 12 wieder öffnen zu können, ist z. B. über ein Touchpanel ein Code einzugeben, aufgrund der über eine Steuerung 14 das Absperrventil 12 geöffnet wird. Der bzw. die Sensoren 14 können dabei z. B. im Zulauf einer Badewanne oder in einem oder in einem Duschkopf und/oder einer Zuleitung zu einem Duschkopf und/oder in einer Badewanne selbst vorgesehen sein.

Die Ventilanordnung 10 ermöglicht dabei, dass durch Zusammenwirken von nachstehend näher zu beschreibenden Anschlagelementen Wasser in verschiedenen Temperaturbereichen abgegeben werden kann, wobei auch ohne Veränderungen an der Ventilanordnung der Bereich eingestellt werden kann, bei dem eine thermische Desinfektion durchgeführt werden.

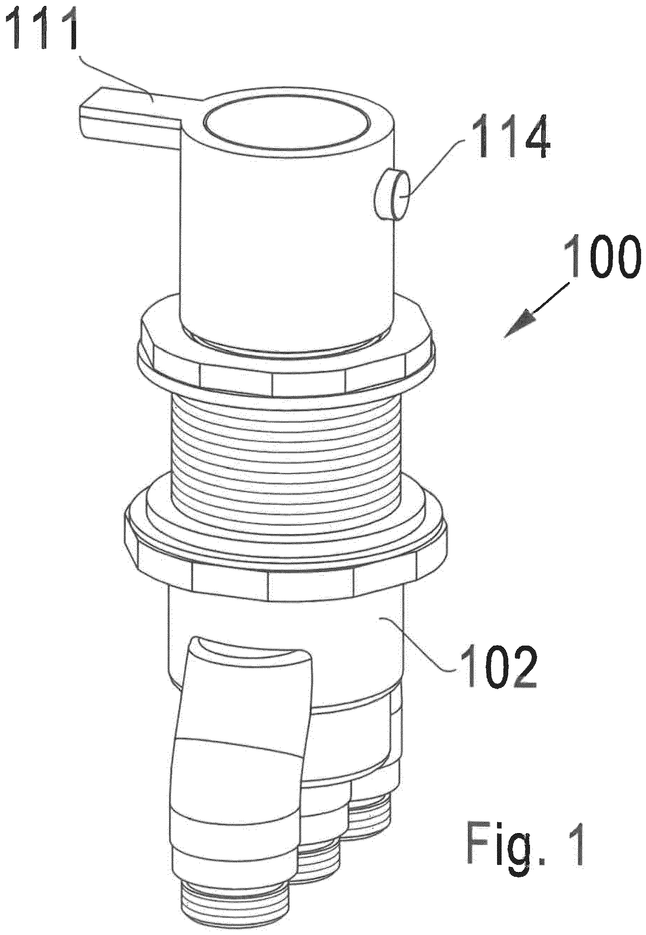

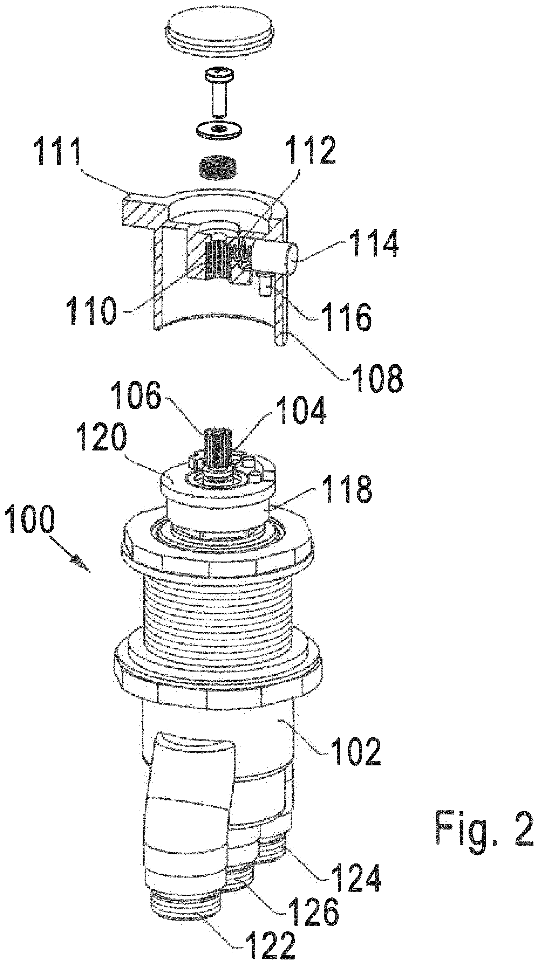

In den Fig. 1 und 2 ist eine Ventilanordnung 100 dargestellt. Aus einem Ventilgehäuse 102 eines insbesondere thermostatgeregelten Wassermischventils ragt eine drehbare Ventilspindel 104 mit einer Riefenverzahnung 106 heraus, um mit einem Stellgriff 108 drehfest verbunden zu werden, der eine zu der Riefelung 106 korrespondierende Verzahnung 110 aufweist.

Seitlich von dem quasi als Zylinderkopf ausgebildeten Verstellgriff 108 ragt eine Handhabe 111 zum Drehen des Verstellgriffs 108 ab. Ferner ist ein mittels z. B. einer Feder 112 vorgespanntes Betätigungselement 114 radial abragend vorgesehen, von dem ein erstes Anschlagelement 116 ausgeht, das mit dem Ventil ortsfest zugeordneten und nachstehend näher beschriebenen weiteren Anschlagelementen zusammenwirkt. Diese gehen von einem ringförmigen bzw. hohlzylinderförmigen Basiskörper 118, und zwar dessen senkrecht zur Längsachse der Spindel 104 verlaufenden Oberseite 120 aus. Der Basisköper 118 ist dabei vorzugsweise gleichfalls über eine Riefelung ortsfest mit dem Gehäuse 102 verbunden.

Die Oberseite 120 kann durch eine Ringscheibe gebildet werden, die Kopfwandung des Basiskörpers 118 ist.

Der Begriff Anschlagelement schließt in der vorliegenden Anmeldung auch Anschlageinrichtung oder sonstige Mittel ein, mittels derer die Drehbewegung des Stellgriffs 108 begrenzt wird.

Mit dem Ventilgehäuse 102 sind Kalt- und Warmwasser führende Zuleitungen 122, 124 sowie eine Auslassleitung 126 verbunden, die z.B. mit dem Schlauch einer Duschbrause 128 und/oder mit einem Einlauf 130 einer Badewanne 132 verbunden ist.

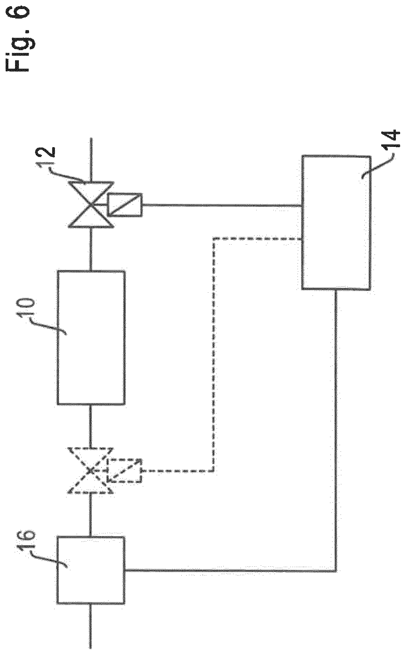

Alternativ kann das Absperrventil auch in der Auslassleitung der Ventilanordnung 10 vorgesehen sein, wie dies durch die gestrichelte Darstellung in Fig. 6 angedeutet wird.

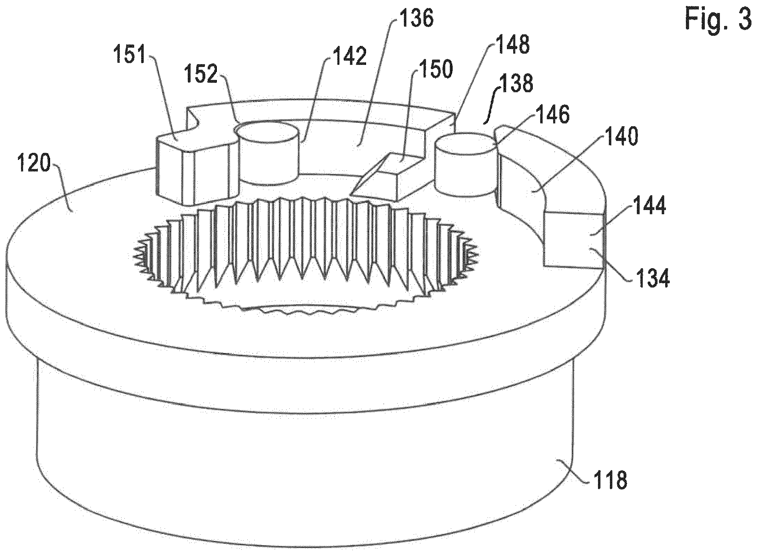

Um Wasser unterschiedlicher Temperaturbereiche zu erhalten, wirkt das mit dem Drehgriff 108 verbundene erste Anschlagelement 116 mit Anschlagelementen des ortsfest mit der Ventilanordnung 100 verbundenen Ringkörpers 118 zusammen, wie dies anhand der Fig. 3 erkennbar ist.

Das erste Anschlagelemente 116 erstreckt sich insbesondere in axialer Richtung des Ventilgehäuses 102 und kann die Form eines Stiftes wie Zylinderabschnitts aufweisen.

Von der senkrecht zur Spindellängsachse verlaufenden Oberseite 120 des Basiskörpers 118 gehen zwei koaxial zur Längsachse des Basiskörpers 118 und damit der Spindel 104 verlaufende auch als erste und zweite Hohlzylindermantelabschnitte 134, 136 bezeichnete Ringabschnitte aus, die zueinander beabstandet sind und somit einen Zwischenraum 138 zur Verfügung stellen. Die Innenseiten 140, 142 der Ringabschnitte 134, 136 verlaufen gleichfalls koaxial zu der Längsachse des Basiskörpers 118 und dienen als Führungsfläche für das rein prinzipiell dargestellte erste Anschlagelement 116, das in der Fig. 3 in drei Positionen dargestellt ist.

Der erste Ringabschnitt 134 weist eine erste Stirnfläche 144 auf, die radial zur Spindelachse und senkrecht zu der von der Oberseite 120 aufgespannten Ebene verläuft. Diese erste Stirnfläche 144 bildet ein zweites Anschlagelement, das ein erstes Anschlagelement oder ein erster Anschlag ist, das ortsfest in der Ventilanordnung 100 positioniert ist.

Der Zwischenraum 138 zwischen dem ersten und zweiten Ring- oder Hohlzylindermantelabschnitt 134, 136 bildet ein drittes Anschlagelement, das ein zweites Anschlagelement ist, das ortsfest angeordnet ist. Der Zwischenraum 138 wird folglich von der zweiten Stirnfläche 146 des ersten Ringabschnitts 134 und von der zugewandten ersten Stirnfläche 148 des zweiten Ringabschnitts 136 begrenzt. Dabei verläuft die zweite Stirnfläche 146 unter einem stumpfen Winkel zur Innenfläche 140 des ersten Ringabschnitts 134, so dass sich eine Schräge bildet, die ein reibungsarmes Zurückdrehen des Drehgriffs 108 ermöglicht, wenn also im Ausführungsbeispiel der Drehgriff 108 im Uhrzeigersinn gedreht wird.

Des Weiteren geht vom ersten Stirnflächenbereich des zweiten Ringabschnitts 136 ein nach innen ragender als Nocken zu bezeichnender Vorsprung 150 aus, dessen in Längsrichtung des Ringkörpers 118 sich erstreckende Höhe geringer als die des Ringabschnitts 136 selbst ist.

Der zweite Ringabschnitt 136 ist in seinem der ersten Stirnfläche 148 fernliegendem Bereich nach innen abgewinkelt (Abschnitt 151), um so im Übergangsbereich 152 ein weiteres, also viertes Anschlagelement für den von dem Stellgriff 108 ausgehenden Anschlag 116 zu bilden. Das vierte Anschlagelement, das das dritte ortsfeste Anschlagelement ist, wird somit von einem nach innen gekröpften Endabschnitt des Ringabschnitts 136 gebildet.

Somit weist der Ringkörper 118 drei Anschlagelemente auf, nämlich die erste Stirnfläche 144 des ersten Ringabschnitts 134, den durch die Stirnflächen 146, 148 des ersten und zweiten Ringabschnitts 134, 136 gebildeten Zwischenraum oder Spalt 138 sowie den abgewinkelten Bereich des zweiten Ringabschnitts 136 verlaufender Bereich 152, als zweites, drittes und viertes Anschlagelement.

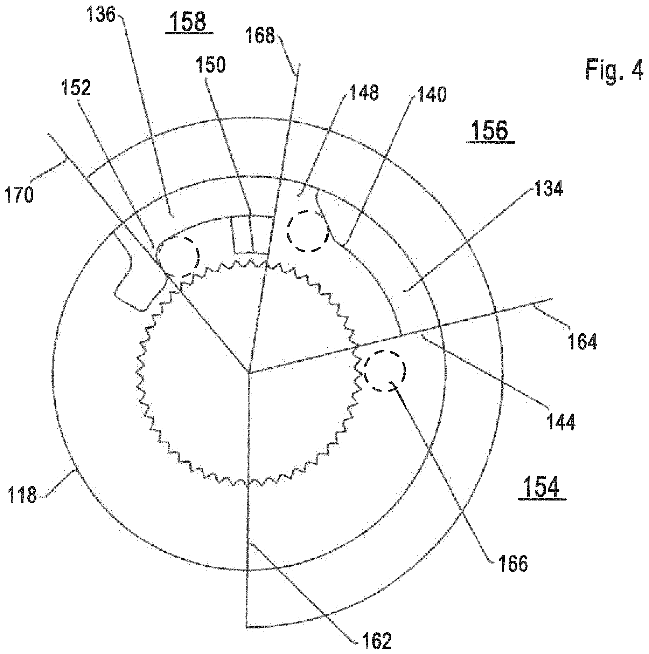

In Fig. 4 sind in Bezug auf den Basiskörper 108 bzw. der Ringscheibe 120 drei Bereiche 154, 156, 158 eingezeichnet, so dass dann, wenn sich in diesen Bereichen das von dem Stellgriff 108 ausgehende erste Anschlagelement 116 befindet, das aus dem Auslass strömende Wasser voneinander abweichende Temperaturen aufweist.

Bei geschlossenem Ventil befindet sich das erste Anschlagelement 116 im Bereich der Linie 162. Wird der Stellgriff 108 entgegen dem Uhrzeigersinn bis zur Linie 164 gedreht, so gelangt das erste Anschlagelement 116 an das erste von der Ringscheibe 120 ausgehende zweite Anschlagelement 144, das die erste Stirnfläche des Ringabschnitts 134 ist. In dem Bereich 154 bis zu dem zweiten Anschlagelement 144 wird von der Ventilanordnung Wasser zwischen kalt und z. B. maximal 38 °C (T1) abgegeben.

Um eine höhere Temperatur zu erreichen, muss das durch die Stirnfläche 144 des ersten Ringabschnitts 134 gebildete und als zweites Anschlagelement bezeichnete Anschlagelement überwunden werden. Hierzu wird das erste Anschlagelement 116 durch Drücken des Betätigungselements 114 in den Stellgriff 108 hinein radial nach innen bewegt (gestrichelte Position 166 in Fig. 4), so dass ein weiteres Drehen des Stellgriffs 108 möglich ist. Dabei wird bei Loslassen des Betätigungselements 114 das erste Anschlagelement 116 entlang der Innenfläche 140 des ersten Ringelements 134 gleitend geführt. Ein Drehen des Stellgriffs 108 ist solange möglich, bis das aufgrund der Wirkung der Feder 112 nach außen kraftbeaufschlagte Anschlagelement 116 in den Spalt bzw. Zwischenraum 148 zwischen dem ersten und dem zweiten Ringelement 134, 136 gleitet, also in den als drittes Anschlagelement bezeichneten Anschlag eingreift. Ein weiteres Drehen über den dritten Anschlag (Linie 168) hinaus ist nicht möglich. In diesem Bereich 156 zwischen zweitem und dritten Anschlag beträgt die Temperatur des Wassers üblicherweise in Abhängigkeit von der Stellung des Stellgriffs 108 zwischen 38 °C und 42 °C (T2).

Grundsätzlich kann durch Drehen des Stellgriffs 108 das von dem Basiskörper 118 bzw. der Ringscheibe 120 ausgehende ortsfeste zweite Anschlagelement, das als drittes Anschlagelement 148 bezeichnet wird, nicht überwunden werden. Erfolgt ein axiales - in der Zeichnung nach oben - Verstellen, kann der Nocken 150 bei gleichzeitigem nach innen verstellten ersten Anschlagelement 116 überwunden werden. In diesem Fall würde das Ventil in einem Umfang geöffnet werden, dass Temperaturen von mehr als 42 °C bis 60 °C, z. B. 70 °C (T3) herrschen würden und somit die Gefahr eines Verbrühens erfolgt.

Um dies kontrolliert auszuschließen, ist erfindungsgemäß das Absperrventil 12 vorgesehen, das über die Steuerung 14 schließt, sofern die Sensoren 16 Temperaturen z.B. von oberhalb von 42 °C erfassen. Ein Öffnen des Absperrventils 12 ist jedoch dann möglich, wenn in das Steuerungspanel ein Code von einer hierfür berechtigten Person eingegeben wird, so dass die thermische Desinfektion durchgeführt werden kann.

Wird der Stellgriff 108 im Ausfiihrungsbeispiel im Uhrzeigersinn gedreht und gelangt somit das Ventil in eine Position, bei der Wasser einer zulässigen Temperatur abfließt, so wird diese von dem oder den Sensoren erfasst, so dass über die Steuerung 14 das Absperrventil 12 geöffnet bleibt und somit eine normale Nutzung der Mischbatterie möglich ist. Zuvor muss selbstverständlich das Absperrventil geöffnet werden, sei es programmiert, sei es nach Eingabe eines Codes.

Durch die Gerade 168 soll die Position angedeutet werden, in der das erste Anschlagelement 116 mit dem dritten Anschlagelement 148 quasi verrastet und die den zulässigen maximalen Stellbereich für das Mischventil symbolisiert. Der Bereich, in dem die Desinfizierungstemperatur erreichbar ist, wird durch die Geraden 168, 170 begrenzt, wobei die Gerade 170 die Position anzeigt, in dem das erste Anschlagelement 116 unüberwindbar an dem von dem Basiskörper 118 ausgehende ortsfeste dritte Anschlagelement 152, das als viertes Anschlagelement bezeichnet wird, anliegt.

Die Ventilanordnung 100 mit den Anschlagelementen bzw. -einrichtungen 116, 138, 144, 152 genießt selbstständig Schutz und ist eigenerfinderisch.

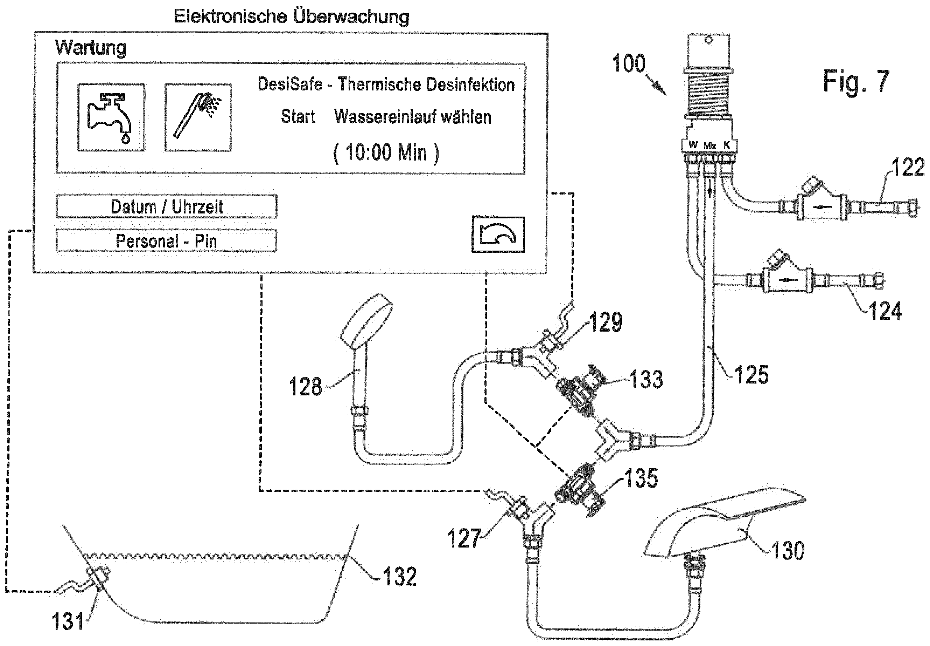

Der Fig. 7 ist rein prinzipiell ein Installationsschema zu entnehmen, aufgrund dessen sichergestellt ist, dass eine Desinfektion der Ventilanordnung 100 erfolgen kann, ohne dass z.B. die Badewanne 132 mit Wasser gefüllt oder aus dem Duschkopf 128 Wasser austritt, das eine Temperatur aufweist, die die Gefahr eines Verbrühens bietet.

Die Ventilanordnung 100 ist mit Leitungen 122, 124 verbunden, um Warm- und Kaltwasser zuzuführen. Vom Anschluss 126 der Ventilanordnung geht eine Leitung 125 aus, in der das Wasser die über die Ventilanordnung eingestellte Temperatur aufweist.

Um sicherzustellen, dass das Wasser eine zulässige Temperatur aufweist, sind Sensoren 127, 129, 131 in den Zuleitungen zum Duschkopf 128 und dem Wasserzulauf zur Badewanne 132 sowie ein Sensor 131 in der Badewanne 132 selbst angeordnet. Diese sind z.B. mit einem Mikroprozessor in der Steuerung verbunden, um dann, wenn eine unzulässig hohe Temperatur erfasst wird, die in den Zuleitungen zu der Badewanne 132 bzw. Duschkopf 128 angeordneten Magnetventile oder sonstige gleichwirkende elektrisch betätigbare Ventile zu schließen.

Sind auslassseitig entsprechende Absperrventile 133, 135 vorgesehen, so können selbstverständlich auch entsprechende Ventile in den Zuleitungen zu der Ventilanordnung 100 oder in den Anschlüssen der Zuleitungen vorgesehen sein.

## Patentansprüche

1. Verfahren zum Steuern der Abgabe einer Flüssigkeit aus einer Armatur (10, 100), insbesondere zur Abgabe von Wasser aus einem Thermostatmischventil bzw. - batterie, umfassend einen mit einer Ventilspindel (104) eines ersten Ventils zusammenwirkenden Stellgriffs (108), wobei der Stellgriff ein erstes Anschlagelement (116) aufweist oder ein solches von diesem ausgeht, das in Abhängigkeit von der Stellung des Stellgriffs mit einem zweiten oder einem dritten Anschlagelement oder -einrichtung (144, 138) zusammenwirkt, die ortsfest dem ersten Ventil zugeordnet sind, wobei die von der Armatur abgegebene Flüssigkeit
- bis zum Zusammenwirken des ersten Anschlagelements mit dem zweiten Anschlagelement oder -einrichtung eine Temperatur T1 aufweist,
- nach Überwinden des zweiten Anschlagelementes oder -einrichtung und bis zum Zusammenwirken des ersten Anschlagelements mit dem dritten Anschlagelement oder -einrichtung eine Temperatur T2 mit T2 > T1 aufweist, und
- nach Überwinden des dritten Anschlagelements oder -einrichtung eine Temperatur T3 mit T3 > T2 aufweist,
**dadurch gekennzeichnet,**
**dass** die Flüssigkeitsabgabe mittels eines über eine codierbare elektrische Steuerung (14) betätigbaren Absperrventils (12) als zweites Ventil dann abgesperrt wird, wenn von dem ersten Ventil abgegebene Flüssigkeit die Temperatur T3 aufweist, und dass das Absperrventil bei der Temperatur T3 erst dann wieder geöffnet wird, wenn ein vorgegebener Code in die Steuerung eingegeben wird.

2. Verfahren nach Anspruch 1,
**dadurch gekennzeichnet,**
**dass** nach Überwinden des dritten Anschlagelements oder -einrichtung (138) und bei weiterem Betätigen, wie Drehen, des Stellgriffs (108) das erste Anschlagelement (116) mit einem unüberwindbaren vierten Anschlagelement oder -einrichtung (152) zusammenwirkt.

3. Verfahren nach Anspruch 1 oder 2,
**dadurch gekennzeichnet,**
**dass** zum Überwinden des zweiten Anschlagelementes oder -einrichtung (144) das erste Anschlagelement (116) radial und/oder zum Überwinden des dritten Anschlagelements oder -einrichtung (138) das erste Anschlagelement sowohl radial als auch axial mittels des Stellgriffs verstellt wird.

4. Verfahren nach zumindest einem der vorhergehenden Ansprüche,
**dadurch gekennzeichnet,**
**dass** die Temperatur der von der Armatur ausströmenden Flüssigkeit, z. B. in einer die Armatur mit einem Flüssigkeitsauslass, wie Wannenauslass oder Duschkopf, verbindenden Leitung und/oder in einer die Flüssigkeit sammelnden Flüssigkeitssammeleinrichtung, wie Dusch- oder Badewanne (132), zumindest ein Temperatursensor (122, 129, 131) angeordnet wird, der mit einer Steuerung (14) verbunden ist, mittels der das Absperrventil (12) gesteuert wird.

5. Flüssigkeitsventilanordnung (10, 100), insbesondere Thermostatmischventil wie - batterie, umfassend einen mit einer aus einem Ventilgehäuse (102) eines ersten Ventils herausgeführten Ventilspindel (104) zusammenwirkenden Stellgriff (108) mit einem verstellbaren ersten Anschlagelement (116), der in unterschiedlichen Drehstellungen des Drehgriffs mit ortsfest dem Ventilgehäuse zugeordneten zweiten und dritten Anschlagelementen oder -einrichtung (144, 138) zusammenwirkt,
**dadurch gekennzeichnet,**
**dass** der Ventilanordnung (10, 100) ein elektrisch betätigbares Absperrventil (12) zugeordnet ist, das mit einer Steuerung (14) verbunden ist, über die das erste Ventil automatisch absperrbar ist, wenn die Temperatur der Flüssigkeit z. B. im Auslassbereich und/oder in einer die Flüssigkeit sammelnden Aufnahme (132) eine vorgegebene Temperatur überschreitet, und dass das Absperrventil geschlossen bleibt, wenn das Eingeben einer vorgegebenen Codierung in die Steuerung unterbleibt, sofern weiterhin eine Temperatur T mit T ≥ T3 in der Flüssigkeit herrscht.

6. Anordnung nach Anspruch 5,
**dadurch gekennzeichnet,**
**dass** die Ventilanordnung (10, 100) ein ortsfest dem Ventilgehäuse (102) zugeordnetes und von dem ersten Anschlagelement (116) unüberwindbares viertes Anschlagelement oder -einrichtung aufweist.

7. Anordnung nach Anspruch 5 oder 6,
**dadurch gekennzeichnet,**
**dass** das erste Anschlagelement (116) über ein von dem Stellgriff (108) ausgehendes federvorgespanntes Betätigungselement (114) zum Überwinden des zweiten und dritten Anschlagelements oder -einrichtung (144, 138) radial verstellbar ausgebildet ist.

8. Anordnung nach zumindest einem der Ansprüche 5 bis 7,
**dadurch gekennzeichnet,**
**dass** zumindest das zweite und das dritte Anschlagelement oder -einrichtung (144, 138) von einem von der Ventilspindel (104) durchsetzten und diese koaxial umgebenden und mit dem Ventilgehäuse (102) verbundenen oder einen Abschnitt von diesem bildenden Basiskörper (118) mit einer eine Ringgeometrie aufweisenden Oberseite (120) ausgehen, wobei das zweite Anschlagelement oder -einrichtung (144) eine erste Stirnfläche eines von der Oberseite ausgehenden koaxial zur Ventilspindel verlaufenden ersten Ring- oder Hohlzylindermantelabschnitts (134) ist und/oder das dritte Anschlagelement oder - einrichtung (148) durch einen zwischen zweiter Stirnfläche (146) des ersten Ring- oder Hohlzylindermantelabschnitts und einer ersten Stirnfläche (148) eines von der Oberseite des Basiskörpers ausgehenden koaxial zu der Ventilspindel verlaufenden zweiten Ring- oder Hohlzylindermantelabschnitts (136) verlaufenden Zwischenraum gebildet ist.

9. Anordnung nach zumindest Anspruch 8,
**dadurch gekennzeichnet,**
**dass** der zweite Ring- oder Hohlzylindermantelabschnitt (136) in seinem zu dessen ersten Stirnfläche (148) fernliegenden Endbereich (150) einen in Richtung der Spindel (104) abgewinkelten Abschnitt als das vierte Anschlagelement (152) aufweist.

10. Anordnung nach zumindest einem der Ansprüche 5 bis 9,
**dadurch gekennzeichnet,**
**dass** von Innenseite (142) des zweiten Ring- oder Hohlzylindermantelabschnitts (136) und im Bereich seiner ersten Stirnfläche (148) verlaufend ein sich radial erstreckender Vorsprung (150) ausgeht, dessen in axialer Richtung des Basiskörpers (118) verlaufende Höhe vorzugsweise geringer als Höhe des zweiten Ring- oder Hohlzylindermantelabschnitts ist.

11. Anordnung nach zumindest Anspruch 10,
**dadurch gekennzeichnet,**
**dass** zum Überwinden des Vorsprungs (150) das erste Anschlagelement (116) radial in Richtung der Spindel (104) und axial verstellt ist.

12. Anordnung nach zumindest Anspruch 8,
**dadurch gekennzeichnet,**
**dass** spindelseitig verlaufende Innenflächen (140, 142) der Ring- oder Hohlzylindermantelabschnitte (134, 136) Führungsfläche für das erste Anschlagelement (116) während der Drehverstellung des Stellgriffs (108) sind.

13. Anordnung nach zumindest einem der Ansprüche 5 bis 12,
**dadurch gekennzeichnet,**
**dass** die Flüssigkeitsventilanordnung (10, 100) über eine Leitung (125) mit einer Flüssigkeitsabgabeeinrichtung (128, 130), wie Duschkopf oder Wannenauslass, verbunden ist, und dass ein vor der Flüssigkeitsabgabeeinrichtung und/oder in einer Flüssigkeitssammeleinrichtung, wie Dusch- oder Badewanne (132), zumindest ein Temperatursensor (122, 129, 131) angeordnet ist, der mit einer Steuerung (14) zum Steuern des Absperrventils (12) verbunden ist.
